# EUROPEAN PATENT APPLICATION

(11) **EP 4 826 944 A1**
(43) Date of publication of application: **21.10.2026**
(21) Application number: 24909819.5
(22) Date of filing: 13.08.2024
(51) Int. Cl.: H02J 3/32

(54) **ENERGY STORAGE SYSTEM**

(30) Priority: 29.12.2023 CN 202311863067
(71) Applicant: Huawei Digital Power Technologies Co., Ltd., Shenzhen, Guangdong 518043 (CN)
(72) Inventor: LI, Lin, Shenzhen, Guangdong 518043 (CN); QU, Wenqiang, Shenzhen, Guangdong 518043 (CN); YANG, Boping, Shenzhen, Guangdong 518043 (CN)
(74) Representative: Huawei European IPR
(86) International application number: PCT/CN2024/111689
(87) International publication number: WO 2025/138868

(57) **Abstract**

This application provides an energy storage system, where the energy storage system includes at least one energy storage device, at least one power conversion system, and an energy management system. The energy management system is in communication connection to the at least one energy storage device, and is in communication connection to the at least one power conversion system. Each energy storage device includes at least one battery cluster and at least one battery control unit, the battery control unit is in communication connection to at least one power conversion system, the battery control unit is in communication connection to the battery cluster in a one-to-one correspondence, and the battery control unit is configured to: monitor operating information of the battery cluster, send the operating information of the battery cluster to the energy management system, and send the operating information of the battery cluster to the at least one power conversion system. The energy management system is configured to deliver a control instruction to the at least one power conversion system and the at least one energy storage device, and the at least one power conversion system is configured to perform charging and discharging control on the at least one energy storage device. According to this application, response speeds of the energy storage system and the energy storage device can be increased, and application scopes of the energy storage system and the energy storage device can be expanded. In addition, manual operation and maintenance costs can be reduced. Therefore, a requirement for fast charging and discharging of the battery cluster can be met.

## Description

This application claims priority to Chinese Patent Application No. 202311863067.3, filed with the China National Intellectual Property Administration on December 29, 2023 and entitled "ENERGY STORAGE SYSTEM", which is incorporated herein by reference in its entirety.

### TECHNICAL FIELD

This application relates to the field of power electronics, and in particular, to an energy storage system.

### BACKGROUND

As people pay more attention to global environmental issues, the new energy industry has developed rapidly in recent years, and new energy has been more widely and deeply applied in the national economy industry. Most new energy features uneven distribution in terms of time and space. An energy storage device has charging and discharging functions, can convert new energy into electric energy for storage when there is plenty of new energy, and can release and supply the electric energy to power grids and users when there is insufficient new energy. Due to such features, application scenarios of an energy storage system become increasingly diverse, and a power level of the energy storage system grows higher. The energy storage system usually includes a plurality of battery clusters. How to quickly charge and discharge the battery cluster, improve response speeds of the energy storage system and the energy storage device, expand application scopes of the energy storage system and the energy storage device, reduce manual operation and maintenance costs, and ensure stable and reliable operation and maintenance of the energy storage system has become a key focus for researchers in the art.

### SUMMARY

This application provides an energy storage system and an energy storage device, which can improve a system response speed and flexibility of an application scenario, reduce manual operation and maintenance costs, and meet a requirement for quickly charging and discharging of a battery cluster.

According to a first aspect, this application provides an energy storage system, where the system includes at least one energy storage device, at least one power conversion system, and an energy management system. The energy management system is in communication connection to the at least one energy storage device, and is in communication connection to the at least one power conversion system. Each energy storage device includes at least one battery cluster and at least one battery control unit. Each battery control unit is in communication connection to at least one power conversion system, and the battery control unit is in communication connection to the battery cluster in a one-to-one correspondence. The battery control unit is configured to: monitor operating information of the battery cluster, send the operating information of the battery cluster to the energy management system, and send the operating information of the battery cluster to the power conversion system. The power conversion system is configured to send the operating information of the battery cluster to the energy management system. The energy management system is configured to deliver a control instruction to the at least one power conversion system and the at least one energy storage device. The at least one power conversion system is configured to perform charging and discharging control on the at least one energy storage device.

In this implementation, there is communication connection between every two of the energy storage device, the energy management system, and the power conversion system. The energy storage device may directly transfer some operating parameters to the power conversion system, and the power conversion system may control charging and discharging processes of the energy storage device in a timely manner without using the energy management system. A response speed of the entire energy storage system is fast. In addition, even if a communication fault occurs between any two of the energy storage device, the energy management system, and the power conversion system, communication can still be performed by using a remaining device or system. This ensures that the energy storage system operates properly. The energy storage device uses a distributed architecture for battery cluster control. To be specific, each battery cluster is controlled by a battery control unit. When a specific battery control unit or battery cluster is faulty, a remaining battery control unit or battery cluster can still operate normally, and reliability is high. In addition, the battery control unit is in communication connection to the power conversion system and is in communication connection to the energy management system. In this way, battery monitoring and control are decoupled, and a response speed of the battery cluster during charging and discharging is faster. The battery control unit is in communication connection to the battery cluster, and is also in communication connection to the power conversion system. Therefore, a connection relationship between the power conversion system and the battery cluster may also be automatically identified. The power conversion system may send an automatically identified topological relationship of the energy storage system to the energy management system. In this way, the energy management system may automatically identify the topological relationship of the energy storage system. Therefore, costs of manually identifying the topological relationship of the energy storage system are reduced.

With reference to the first aspect, in an implementation, each energy storage device includes a centralized management unit, the centralized management unit is in communication connection to the energy management system, and the at least one battery control unit is configured to send the operating information of the battery cluster to the energy management system via the centralized management unit. The energy storage device uses a distributed architecture, and a plurality of battery control units are controlled by one centralized management unit. In this way, the battery control units can be accurately monitored and controlled. In addition, a fault on a single battery control unit does not affect a remaining battery control unit that operates properly.

With reference to the first aspect, in an implementation, the at least one battery control unit in each energy storage device is in communication connection in sequence, and each of a first battery control unit and a last battery control unit in the battery control unit that is in communication connection in sequence is in communication connection to the centralized management unit in the energy storage device. In this implementation, battery control units are connected in a "hand-in-hand" communication connection manner. This can reduce a quantity of communication ports for communication connection between the centralized management unit and the plurality of battery control units. When one of two communication ports of the centralized management unit or of the battery control units is faulty, the energy storage device can still operate normally.

With reference to the first aspect, in an implementation, each battery control unit in each energy storage device is in communication connection to the centralized management unit in the energy storage device. In this implementation, each battery control unit is in communication connection to the centralized management unit. When one or more of the plurality of battery control units is or are faulty, it can be ensured that a remaining battery control unit can still normally communicate with the centralized management unit.

With reference to the first aspect, in an implementation, the at least one power conversion system is in communication connection in sequence, and each of a first power conversion system and a last power conversion system in the power conversion system that is in communication connection in sequence is in communication connection to the energy management system. In this implementation, power conversion systems are connected in a "hand-in-hand" communication connection manner. This can reduce a quantity of communication ports that are used for communication connection between the energy management system and the power conversion systems. In addition, this ensures that when some power conversion systems are faulty, a remaining power conversion system can still operate normally.

With reference to the first aspect, in an implementation, each of the at least one power conversion system is in communication connection to the energy management system. In this implementation, each power conversion system is in communication connection to the energy management system. This can ensure that when some power conversion systems are faulty, a remaining power conversion system can still operate normally.

With reference to the first aspect, in an implementation, each power conversion system includes a monitoring unit and a control unit, there is a first communication line and a second communication line between the monitoring unit and the control unit, and a baud rate of the first communication line is different from a baud rate of the second communication line. In this implementation, the power conversion system uses dual-channel communication, and decouples operation and maintenance information of the power conversion system from operating information of the power conversion system. This ensures that the foregoing two types of information are transmitted without interference, and improves operating reliability of the power conversion system.

With reference to the first aspect, in an implementation, each battery cluster is in power connection to at least two power conversion systems. In this implementation, power conversion systems are parallelly connected, to increase charge and discharge power of the energy storage device. In addition, the solution is easy to expand, flexible, and reliable.

With reference to the first aspect, in an implementation, each battery control unit is in communication connection to at least two power conversion systems. This implementation uses a technical solution in which power conversion systems are parallelly connected. A group of parallelly connected power conversion systems are still in communication connection to a corresponding battery control unit.

With reference to the first aspect, in an implementation, the at least one power conversion system is configured to receive information about a connection relationship between the at least one power conversion system and the at least one battery control unit, where the information about the connection relationship is sent to the energy management system. In this implementation, the power conversion system is in communication connection to the battery control unit. Therefore, information about a connection relationship between the power conversion system and the battery control unit/battery cluster may be automatically identified by a machine without manual intervention. This greatly improves identification efficiency, and is particularly suitable for an application scenario with high power. The energy management system may automatically identify a topological relationship of the energy storage system.

With reference to the first aspect, in an implementation, a manner of the communication connection includes CAN communication or FE communication.

With reference to the first aspect, in an implementation, each energy storage device includes an environmental device, the environmental device is in communication connection to the centralized management unit, and the environmental device includes a fire extinguishing device, a temperature control device, an anti-theft device, or an auxiliary power supply device. In this implementation, the environmental device is in communication connection to the centralized management unit, and the energy management system may monitor or control environmental parameters such as fire extinguishing, temperature control, water leakage, a door status sensor, temperature, and humidity of the energy storage device to ensure that the energy storage device is always in an environment suitable for the device to operate.

According to a second aspect, this application provides an energy storage device, where the device includes a battery cluster, a battery control unit, and a centralized management unit. The battery cluster is in communication connection to the battery control unit. The battery cluster is configured to be in power connection to a power conversion system, the battery control unit is configured to be in communication connection to the power conversion system, and the centralized management unit is configured to be in communication connection the energy management system. The battery cluster is configured to store electric energy, the battery control unit is configured to send battery information of the battery cluster to the centralized management unit, and the centralized management unit is configured to send the battery information to the energy management system. The power conversion system is configured to perform conversion between a direct current and an alternating current, and the energy management system is configured to monitor and control the energy storage device and the power conversion system.

With reference to the second aspect, in an implementation, the energy storage device includes a plurality of battery control units. The plurality of battery control units are in communication connection in sequence, and each of a first battery control unit and a last battery control unit in the plurality of battery control units is in communication connection to the centralized management unit.

With reference to the second aspect, in an implementation, the energy storage device includes a plurality of battery control units. Each of the plurality of battery control units is in communication connection to the centralized management unit.

With reference to the second aspect, in an implementation, the energy storage device includes a plurality of battery clusters. Each of the plurality of battery clusters is configured to be in power connection to at least two of a plurality of power conversion systems.

With reference to the second aspect, in an implementation, the energy storage device includes a plurality of battery control units. Each of the plurality of battery control units is configured to be in communication connection to at least two of a plurality of power conversion systems.

With reference to the second aspect, in an implementation, the energy storage device includes an environmental device, the energy storage device is in communication connection to the environmental device, and the environmental device includes a fire extinguishing device, a temperature control device, an anti-theft device, or an auxiliary power supply device.

According to a third aspect, this application provides a power conversion system. The power conversion system is configured to: be in communication connection to an energy management system, and perform charging and discharging control on an energy storage device. The power conversion system is configured to: be in communication connection to a battery control unit in the energy storage device, and receive operating information that is of a battery cluster and that is sent by the battery control unit. The power conversion system is configured to send the operating information of the battery cluster to the energy management system, and receive a control instruction delivered by the energy management system.

With reference to the third aspect, in an implementation, the power conversion system includes a monitoring unit and a control unit, there is a first communication line and a second communication line between the monitoring unit and the control unit, and a baud rate of the first communication line is different from a baud rate of the second communication line.

With reference to the third aspect, in an implementation, the power conversion system is configured to: receive information about a connection relationship between the power conversion system and the battery control unit, and send the information about the connection relationship to the energy management system.

With reference to the third aspect, in an implementation, a manner of the communication connection includes CAN communication or FE communication.

For beneficial effects achieved by the technical solutions disclosed in the second aspect and the third aspect, refer to the first aspect. Details are not described herein again.

### BRIEF DESCRIPTION OF DRAWINGS

FIG. 1 is a diagram of an application scenario of an energy storage system according to an embodiment of this application;
FIG. 2 is a diagram of an architecture of an energy storage system according to an embodiment of this application;
FIG. 3 is a diagram of a communication architecture of an energy storage system according to an embodiment of this application;
FIG. 4 is a diagram of a communication architecture of another energy storage system according to an embodiment of this application; and
FIG. 5 is a diagram of a communication architecture of still another energy storage system according to an embodiment of this application.

### DESCRIPTION OF EMBODIMENTS

The following describes technical solutions of this application with reference to accompanying drawings.

Reference to "some embodiments" or the like described in this specification indicates that one or more embodiments of this application include a specific feature, structure, or characteristic described with reference to the embodiments. Therefore, statements such as "in some embodiments" or the like that appear at different places in this specification do not necessarily mean reference to a same embodiment, but mean "one or more but not all of embodiments", unless otherwise specifically emphasized in another manner. Terms "include", "comprise", "have", and variants thereof all mean "include but are not limited to", unless otherwise specifically emphasized in another manner.

For ease of understanding, the following first explains and describes related technical terms and English abbreviations in embodiments of this application.

Photovoltaic inverter: An inverter is a converter that converts a direct current into a constant-frequency and constant-voltage alternating current or a frequency-modulated and voltage-regulated alternating current. The photovoltaic inverter is an inverter that converts a variable direct current voltage generated by a solar panel (also referred to as a photovoltaic panel) into a mains frequency alternating current.

Power conversion system: PCS, power conversion system. The power conversion system can perform conversion between a direct current and an alternating current, and can directly supply power to an alternating current load when there is no power grid.

Energy management system: EMS, energy management system. The energy management system is a highest-level control unit in an energy storage system, and is responsible for monitoring and controlling an operating status of the entire energy storage system.

Centralized management unit: CMU, centralized management unit. The centralized management unit is a main control unit of an energy storage device, and is connected to a battery control unit. In addition, the centralized management unit is further connected to an environmental device in the energy storage device, such as a fire extinguishing device, a temperature control device, an anti-theft device, and an auxiliary power supply device.

Battery control unit: BCU, battery control unit. The battery control unit controls, manages, detects, or calculates electrical and thermal parameters of a battery system.

State of charge: SOC, state of charge. The state of charge indicates a percentage of a capacity that can be withdrawn from an available capacity of a current storage battery under a specified discharge condition.

State of health: SOH, state of health. The state of health is a comprehensive indicator that describes battery quality.

Micro control unit: MCU, micro control unit.

Controller area network: CAN, controller area network. The CAN is a serial communication bus that can effectively support distributed real-time control with a high security level.

Fast Ethernet: FE, fast Ethernet. An FE refers to any Ethernet network that supports 100 Mbit/s.

Particularly, in this application, communication connection is a connection manner in which communication is implemented between connected devices through signal transmission and interaction, and power connection is a connection manner in which a strong-current circuit is formed between connected devices through power energy transmission.

Embodiments of this application provide an energy storage system and an energy storage device.

The energy storage system includes the energy storage device, a power conversion system, and an energy management system. The energy storage device is connected to a power grid or a load via the power conversion system. The energy storage device is in communication connection to the energy management system, the energy management system is in communication connection to the power conversion system, and the power conversion system is in communication connection and power connection to the energy storage device. The power conversion system is configured to perform conversion between a direct current and an alternating current, and the energy management system is configured to monitor and control the energy storage device and the power conversion system.

The energy storage device includes a battery cluster, a battery control unit, and a centralized management unit. The battery cluster is in communication connection to the battery control unit and in power connection to the power conversion system. The battery control unit is in communication connection to the power conversion system. The centralized management unit is in communication connection to the energy management system. The battery cluster is configured to store electric energy. The battery control unit is configured to send battery information of the battery cluster to the centralized management unit. The centralized management unit is configured to send the battery information to the energy management system.

According to the energy storage system provided in embodiments of this application, there is communication connection between every two of the energy storage device, the energy management system, and the power conversion system. This improves a communication response speed of the entire system, decouples battery power control from battery operating information monitoring, and ensures that the system can operate stably. The power conversion system is in communication connection to the battery control unit, and the battery control unit is in communication connection to the battery cluster. The power conversion system can send a connection relationship between the battery cluster and the power conversion system in the energy storage system to the energy management system in a northbound direction. In this way, a topological relationship of the energy storage system can be automatically identified. In addition, dual-channel communication is implemented inside the power conversion system. This can decouple operation and maintenance of the energy storage device from operating of the energy storage device, and ensure that the energy storage device can operate stably.

The energy storage device provided in embodiments of this application may be applied to various application scenarios that require an energy storage device, such as pure energy storage, photovoltaic energy storage, and wind energy storage scenarios.

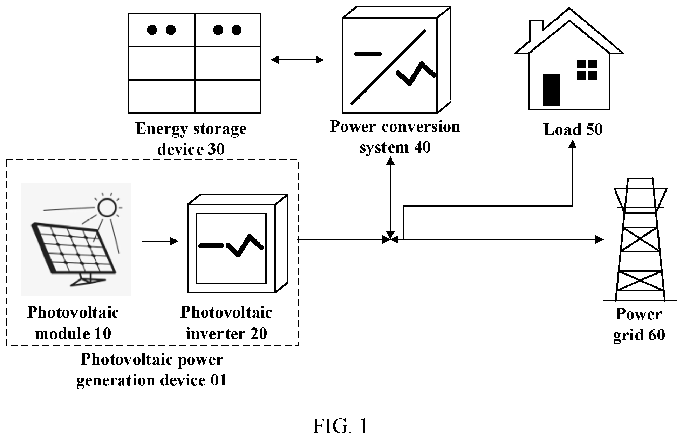

Refer to FIG. 1. FIG. 1 is a diagram of an application scenario of an energy storage system according to an embodiment of this application. In an implementation, the application scenario includes a photovoltaic power generation device 01, an energy storage system 30, a power conversion system 40, a load 50, and a power grid 60. Optionally, the photovoltaic power generation device 01 may further include a photovoltaic module 10 and a photovoltaic inverter 20.

Specifically, in this application scenario, the energy storage system 30 is connected to the load 50 and the power grid 60 through the power conversion system 40. An energy flow between the energy storage system 30 and the power conversion system 40 is bidirectional, an energy flow between the power conversion system 40 and the power grid 60 is bidirectional, and an energy flow of the load 50 is unidirectional. The load 50 may obtain energy from a power system for use. When power of the power grid 60 is sufficient, an alternating current of the power grid 60 is converted into a direct current through rectification by using the power conversion system 40, and then the direct current is stored in the energy storage system 30. When power of the power grid 60 is insufficient, the energy storage system 30 transmits energy to the power conversion system 40 through a direct current, and the power conversion system 40 converts the direct current into an alternating current for the load 50 to use. Particularly, in some scenarios where an intelligent power consumption management system is used, charging and discharging processes of the energy storage system 30 may be controlled by using a specific policy. For example, the specific policy is an electricity cost reduction policy. When an electricity price in the power grid 60 is low, the energy storage system 30 is controlled to start charging. When an electricity price in the power grid 60 is high, the energy storage system 30 is controlled to discharge to start the load 50.

Further, the energy storage system provided in this application may be used with the photovoltaic power generation device 01. The photovoltaic power generation device 01 includes the photovoltaic module 10 and the photovoltaic inverter 20. The photovoltaic module 10 may convert solar energy into direct current energy, and the photovoltaic inverter converts a direct current into an alternating current. In combination with the photovoltaic power generation device 01, more abundant energy sources may be provided in an application scenario of the energy storage system. An alternating current generated by the photovoltaic power generation device may be supplied to the load 50 and the power grid 60, or may be converted by the power conversion system 40 and stored in the energy storage system 30. In addition, specific policies used in application scenarios of the energy storage system become more diverse. For example, the specific policy is a policy of achieving self-sufficiency in photovoltaic power generation. In the daytime, the photovoltaic power generation device 01 generates power, and generated electric energy is preferentially supplied to the load 50 for use, and then stored in the energy storage system 30. When there is sufficient sunlight, redundant electric energy may be further supplied to the power grid 60. At night, the energy storage system 30 is preferentially used to supply power to the load 50. When a power consumption requirement of the load 50 is high, the power grid 60 supplements a part of electric energy required by the load 50.

The energy storage system usually includes a battery cluster, a PCS, and an EMS. In an actual operating scenario, the EMS collects operating status parameters of the battery cluster and the PCS in real time, such as a quantity of electricity in and a voltage of the battery cluster and real-time power of the PCS. Then, the EMS delivers, to the battery cluster and the PCS based on the operating status parameters and a user instruction, a control instruction for controlling an operating status. When the EMS collects the operating status parameters and delivers the control instruction, communication of the EMS is implemented based on a communication channel (or communication connection) between the battery cluster, the PCS, and the EMS.

Currently, in the energy storage field, a battery capacity of an energy storage system is growing larger and power of an electric device is becoming higher. Therefore, a quantity of battery clusters and a quantity of PCSs in the energy storage system gradually increase, and a case in which the PCS and the battery cluster preempt a communication channel from each other becomes more prominent. Consequently, the energy storage system cannot quickly respond to a control instruction from an EMS. In addition, in an existing technology, installation personnel need to manually determine connection statuses of the battery cluster and the PCS in the energy storage system on site. However, as the quantity of battery clusters and the quantity of PCSs increase, operation and maintenance difficulty and costs of the energy storage system rapidly increase, especially in scenarios with an industrial and commercial power station and a large ground power station. In such scenarios, hundreds or thousands of battery clusters are deployed, and manually determining the connection statuses is error-prone and costly. Moreover, as the quantity of battery clusters increases, inconsistency in battery specifications at delivery may have a more significant impact on the energy storage system.

By contrast, in the technical solution provided in this application, each battery cluster is independently controlled by a BCU, and inconsistency in battery clusters can be reduced or even eliminated. In addition, there is communication connection between every two of the EMS, the BCU, and the PCS; the control instruction delivered by the EMS can be quickly responded; and the EMS can collect the operating status parameters of the battery cluster and the PCS in a timely manner. Furthermore, the EMS can automatically identify a topological connection manner between the battery cluster and the PCS in the energy storage system without manual identification.

The following describes in detail an architecture and a specific connection manner of an energy storage system provided in embodiments of this application. It should be understood that the energy storage system provided in embodiments of this application applies to a pure energy storage scenario. Alternatively, the energy storage system may be applied to a photovoltaic energy storage scenario in which photovoltaic power generation is coupled, a wind energy storage scenario in which wind power generation is coupled, a hydraulic energy storage scenario in which hydropower generation is coupled, a photovoltaic-wind energy storage scenario in which photovoltaic power generation and wind power generation are coupled, or the like. An application scenario of the energy storage system is not limited in this application.

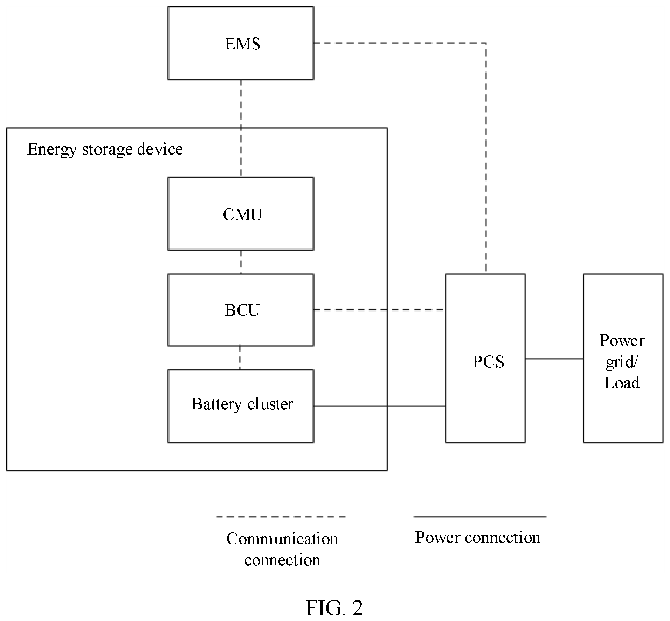

Refer to FIG. 2. FIG. 2 is a diagram of an architecture of an energy storage system according to an embodiment of this application. In the figure, a dashed line represents communication connection, and a solid line represents power connection.

In an implementation, the energy storage system includes an energy storage device, a PCS, and an EMS, where the PCS is configured to be connected to a power grid or a load. The energy storage device is in communication connection to the EMS, and is in communication connection and power connection to the PCS. The EMS is in communication connection to the PCS, and the PCS is in power connection to the power grid or the load. A main component of the energy storage device is a battery, which is configured to store electric energy. The energy storage device is in power connection to the power grid or the load through the PCS. When the energy storage device performs charging, the PCS converts an alternating current from the power grid or the load into a direct current for the energy storage device. When the energy storage device performs discharging, the PCS converts a direct current released by the energy storage device into an alternating current for the power grid or the load. The EMS is in communication connection to each of the energy storage device and the PCS. In this way, the energy storage device and the PCS may separately report monitored device information and operating parameters to the EMS by using two communication paths, and the EMS may also deliver control signals separately to the energy storage device and the PCS by using the two communication paths. Communication between the EMS and the energy storage device is relatively independent of communication between the EMS and the PCS. This can improve signal response speeds of the EMS, the energy storage device, and the PCS, and therefore ensures quick response of the entire energy storage system. The PCS is in communication connection to the energy storage device. The energy storage device may directly transfer some of operating parameters or monitored information to the PCS, and the PCS may control charging and discharging processes of the energy storage device in a timely manner. This helps limit and control a current of a single battery cluster during charging and discharging. Compared with a technical solution in which no communication connection exists between the PCS and the energy storage device, in this application, communication between the PCS and the energy storage device can be implemented without using the EMS, and a communication response speed between the PCS and the energy storage device is also accelerated. In addition, topology of the energy storage system can be automatically identified, which is described in detail below. Particularly, there is communication connection between every two of the EMS, the energy storage device, and the PCS. Even if a communication fault occurs between two of the EMS, the energy storage device, and the PCS, normal communication can still be performed by using a remaining device or system. For example, when a communication fault occurs between the energy storage device and the PCS, the energy storage device can still communicate with the PCS by using the EMS. This ensures normal operating of the energy storage system.

The energy storage device includes a battery cluster, a CMU, and a BCU. The battery cluster is a main component of the energy storage device, and determines a power capacity of the energy storage device. The battery cluster is in power connection to the PCS, and the PCS directly controls a charging or discharging process of the battery cluster. For example, the PCS may control whether to discharge the battery cluster. In addition, the PCS may control a power or current value in the charging or discharging process of the battery cluster. As an upper-layer control unit of the battery cluster, the BCU is in communication connection to each of the battery cluster and the PCS, and may monitor an operating parameter and a status of the battery cluster in real time. For example, the BCU monitors an SOC value, an SOH value, a temperature, and the like of the battery cluster in an operating process in real time. Then, the BCU delivers a control instruction to the PCS based on the operating parameter and the status of the battery cluster, to drive the PCS to adjust the charging or discharging process of the battery cluster. Compared with a technical solution in which no communication connection exists between the BCU and the PCS, in this application, the BCU may directly deliver a control instruction to the PCS without using the CMU, the EMS, or the like, and a response process in which the PCS controls charging and discharging of the battery cluster is faster. As a main control unit in the energy storage device, the CMU is in communication connection to the BCU in a southbound direction, and is in communication connection to the EMS in a northbound direction. In addition, the CMU may further be connected to a fire extinguishing device, a temperature control device, an anti-theft device, and the like in the energy storage device. In general, one CMU may be used to monitor and control a plurality of BCUs to manage the plurality of CMUs in a centralized manner. The CMU can report battery cluster parameters monitored by the BCU to the EMS. On the basis of these battery cluster parameters, the EMS presents a battery operating status of the energy storage system to a user, adjusts an operating policy, and sends a control instruction to the CMU and the PCS. In addition, the CMU can control an environmental device, such as the temperature control device, in the energy storage device to ensure that a temperature inside the energy storage device is within a proper range and that the battery cluster and other devices can work properly.

In scenarios of industrial and commercial energy storage and power station energy storage, the energy storage device is usually in a structure of a box or cabinet. The battery cluster is placed in the box-type or cabinet-type energy storage device to be isolated from an external environment. In other words, after the energy storage system is fully installed, the PCS is located outside the energy storage device. If the energy storage device is not open, a connection relationship between the PCS and the battery cluster cannot be determined, that is, a topological relationship in the energy storage system cannot be determined. In an operating process of the energy storage device, a battery cluster may need to be repaired or replaced. To accurately locate the battery cluster that needs to be repaired or replaced, the topological relationship in the energy storage system needs to be determined. In an industrial and commercial energy storage scenario, for example, one energy storage device includes one battery cluster and two PCSs. In a power station energy storage scenario, for example, one energy storage device includes six battery clusters and 12 PCSs. As quantities of battery clusters, PCSs, and energy storage devices increase, manually identifying topology of the energy storage system is costly, with a high false positive rate. In this application, the PCS is in communication connection to the BCU, and a connection relationship between the PCS and the BCU may be automatically identified. In addition, the BCU is in communication connection to the battery cluster. Therefore, a connection relationship between the PCS and the battery cluster may also be automatically identified. Each PCS sends the connection relationship to the energy management system. In this way, the energy management system summarizes all connection relationships between BCUs and the PCS in the energy storage system, and automatically identifies a topological relationship in the energy storage system without manual intervention. The energy management system can present connection statuses of devices in the monitored energy storage system to a user. Therefore, a battery cluster that needs to be repaired or replaced can be accurately located.

If the energy storage device is in a form of an energy storage box, the CMU can serve as a main control unit of the energy storage box. The CMU may also be referred to as a container monitor unit.

The following describes this solution with reference to a specific communication manner.

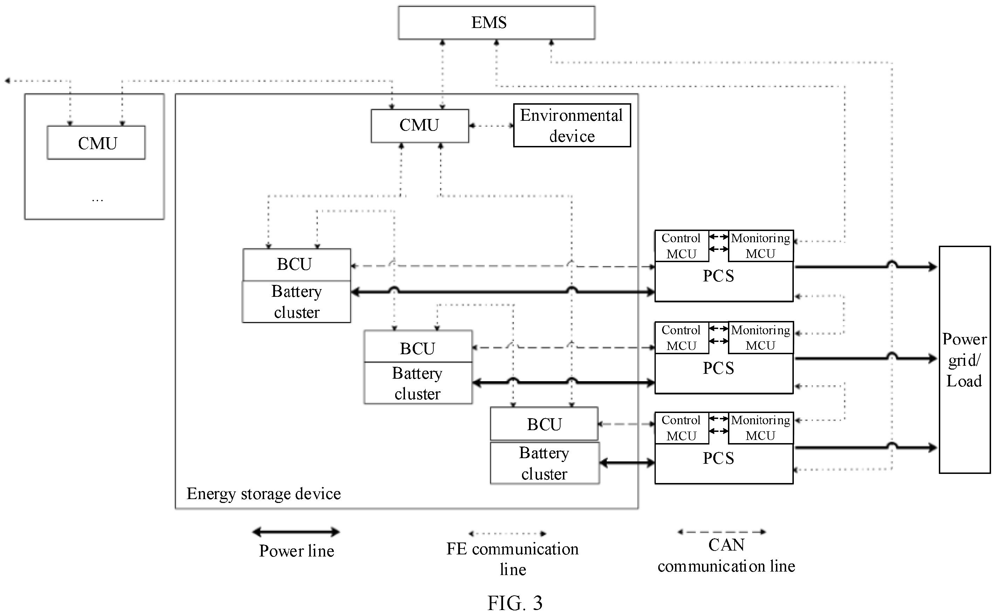

Refer to FIG. 3. FIG. 3 is a diagram of a communication architecture of an energy storage system according to an embodiment of this application. In the figure, a thick solid line represents power connection, a dotted line represents FE communication connection, and a dashed line represents CAN communication connection.

In an implementation, the energy storage system includes an energy storage device, a plurality of PCSs, and an EMS. The PCS is configured to be connected to a power grid or a load, and the energy storage device includes a plurality of battery clusters and a plurality of BCUs. Each of the plurality of battery clusters is connected to each of the plurality of BCUs in a one-to-one correspondence, and there is communication connection (not shown in FIG. 3) between each battery cluster and each BCU. One battery cluster is managed by one BCU. When a specific BCU or battery cluster is faulty, a remaining BCU or battery cluster can still work properly. This ensures high reliability. The plurality of BCUs are in an FE communication connection to the CMU in a "hand-in-hand" connection manner. To be specific, the plurality of BCUs are sequentially connected, two BCUs at the beginning and end of the connection are connected to the CMU, and the plurality of BCUs and the CMU form a ring network. The plurality of BCUs send battery information, such as SOC or SOH information, of the plurality of correspondingly connectedbattery clusters to the CMU in a communication manner; and the CMU sends the battery information to the EMS in a northbound direction. In the "hand-in-hand" connection manner, a quantity of communication ports that are of the CMU and that are used for establishing communication connections between the plurality of BCUs and the CMU can be reduced. In this implementation, only two communication ports are needed. In addition, even if one of the two communication ports of the CMU is faulty, the other communication port can still ensure normal communication between the plurality of BCUs and the CMU. Similarly, even if one of two communication ports of each BCU is faulty, the other communication port can still ensure normal communication between each BCU and the CMU. In this embodiment, the CMU may be further in communication connection to a CMU in another energy storage device by using an FE communication line, to implement information exchange between a plurality of energy storage devices.

The energy storage device further includes environmental devices such as a fire extinguishing device, a temperature control device, an anti-theft device, and an auxiliary power supply device. The environmental device is in communication connection to the CMU. The CMU can send information, such as fire extinguishing information, security information, and an environmental parameter, to the EMS in the northbound direction. A user can monitor the preceding parameters of the energy storage device in real time and control environmental parameters such as fire extinguishing, temperature control, water leakage, a door status sensor, temperature, and humidity inside a container to ensure that the energy storage device is always in an environment suitable for the device to operate.

Each of the plurality of PCSs is in power connection to each of the plurality of battery clusters at a one-to-one correspondence. The plurality of PCSs serve as power conversion devices. Further, the plurality of PCSs are in power connection to the power grid or the load to perform charging and discharging control on the plurality of battery clusters. Each of the plurality of PCSs is in communication connection to each of the plurality of BCUs in a one-to-one correspondence, and the communication connection between each PCS and each BCU is CAN communication. The plurality of PCSs are in an FE communication connection to the EMS in a "hand-in-hand" connection manner. To be specific, the plurality of PCSs are sequentially connected, two PCSs at the beginning and end of the connection are connected to the EMS, and the plurality of PCSs and the EMS form a ring network. There is communication connection between a BCU and a PCS in a correspondence. In this way, topology of a power architecture of the energy storage system can be automatically identified. In addition, the plurality of PCSs send connection relationships between the plurality of PCSs and the plurality of BCUs to the EMS. Therefore, even if a large quantity of PCSs or a large quantity of battery clusters exist, no manual intervention is required. The energy storage system can quickly identify the topology of the power architecture of the energy storage system. Moreover, quick exchange of information between the plurality of PCSs and the plurality of BCUs can be implemented. The plurality of PCSs are in direct communication connections to the plurality of BCUs. Therefore, a fast response speed and high battery safety are achieved. The plurality of PCSs are in communication connection to the EMS in a "hand-in-hand" connection manner. Therefore, reliability is high. The EMS may deliver a control instruction to the plurality of PCSs based on a topological relationship between the plurality of PCSs and the plurality of BCUs in combination with information about the plurality of battery clusters. The plurality of PCSs may also send operating information of the battery clusters or operating information of the plurality of PCSs to the EMS. In this embodiment, the CMU and the plurality of PCSs are separately connected to the EMS by using independent FE communication connection lines. Run log of the battery clusters and a battery information monitoring instruction delivered by the EMS are transmitted via the CMU, and a power control instruction delivered by the EMS is directly delivered to the PCS. This decouples the plurality of battery clusters from the energy storage device, thereby improving reliability of the energy storage device. In addition, the plurality of PCSs may directly receive the control instruction from the EMS, and therefore a response speed is fast.

Each PCS includes a control MCU and a monitoring MCU, and the control MCU and the monitoring MCU are connected by using two CAN communication lines. The monitoring MCU serves as a port for communication between each PCS and the energy management system. When the energy management system sends information to each PCS, the monitoring MCU first processes the information, and then sends processed information to the control MCU. Similarly, when each PCS sends information to the energy management system, the PCS sends, to the energy management system via the monitoring MCU, the information that needs to be sent. In this implementation, the control MCU and the monitoring MCU exchange data by using two CAN communication lines. One of the two CAN communication lines is used to transmit an operating instruction that needs a quick response, such as a control instruction sent by the EMS for controlling a charge or discharge power of the energy storage system. The other of the CAN communication lines is used to transmit an operation and maintenance instruction that does not need a quick response, such as management information, log information, or upgrade information of the energy storage device. The two CAN communication lines have different baud rates. In this way, operation and maintenance of the power conversion system can be decoupled from operating of the power conversion system. This ensures that two types of information do not interfere with each other. In addition, the power conversion system can operate more stably.

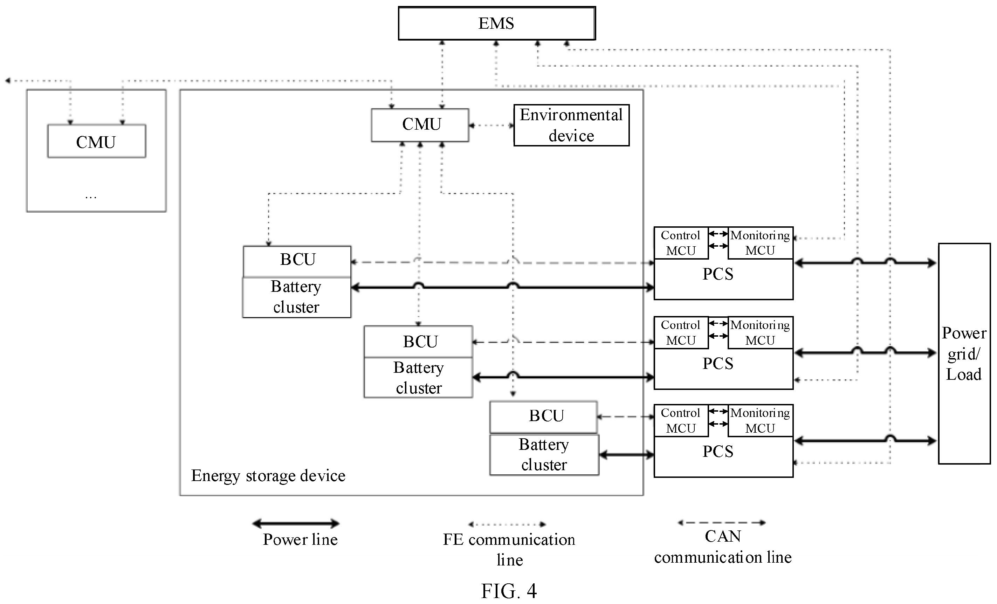

Refer to FIG. 4. FIG. 4 is a diagram of a communication architecture of another energy storage system according to an embodiment of this application. In the figure, a thick solid line represents power connection, a dotted line represents FE communication connection, and a dashed line represents CAN communication connection.

In an implementation, different from the energy storage system shown in FIG. 3 in this application, a CMU is connected to a plurality of BCUs in a different manner, and an EMS is connected to a plurality of PCSs in a different manner. In this embodiment, each of the plurality of BCUs is in an FE communication connection to the CMU. When one of the plurality of BCUs is faulty or some of the plurality of BCUs are faulty, this connection manner can ensure normal communication between a remaining BCU and the CMU. Therefore, operating reliability of the energy storage device is improved. Each of the plurality of PCSs is in an FE communication connection to the EMS. Similarly, when one of the plurality of PCSs is faulty or some of the plurality of PCSs are faulty, this connection manner can ensure normal communication between a remaining PCS and the EMS. Therefore, operating reliability of the energy storage device is improved.

It should be understood that a manner of connection between the plurality of BCUs and the CMU and a manner of connection between the plurality of PCSs and the EMS may further be that: (1) the plurality of BCUs are in communication connection to the CMU in a "hand-in-hand" connection manner, and the plurality of PCSs each are in communication connection to the EMS; or (2) the plurality of BCUs each are in communication connection to the CMU, and the plurality of PCSs are in communication connection to the EMS in a "hand-in-hand" connection manner.

It should be understood that the technical solutions of the foregoing two embodiments can facilitate modifications to an architecture of an existing energy storage system. On the basis of the existing architecture, a PCS or battery cluster can be quickly added or removed. This ensures good flexibility of the entire energy storage system.

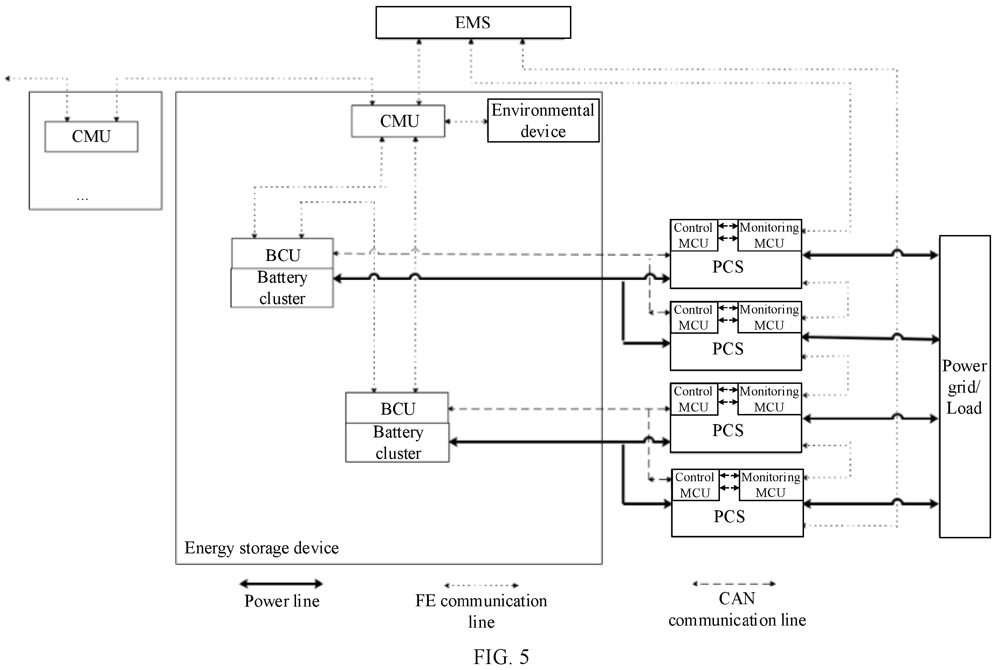

Refer to FIG. 5. FIG. 5 is a diagram of a communication architecture of still another energy storage system according to an embodiment of this application. In the figure, a thick solid line represents power connection, a dotted line represents FE communication connection, and a dashed line represents CAN communication connection.

In an implementation, the energy storage system includes an energy storage device, a plurality of PCSs, and an EMS. The PCS is configured to be connected to a power grid or a load, and the energy storage device includes a plurality of battery clusters and a plurality of BCUs. Different from that in the energy storage system shown in FIG. 3 of this application, two PCSs in the plurality of PCSs perform charging and discharging control on a same battery cluster in a parallel manner. In other words, each of the plurality of BCUs is in a CAN communication connection to two PCSs, and each of the plurality of battery clusters is in power connection to two PCSs. The plurality of PCSs are still in an FE communication connection to the EMS in a "hand-in-hand" connection manner. In this technical solution, PCSs are parallelly connected. This increases charge and discharge power of the energy storage device, and expands an application scope of the energy storage system.

It should be understood that a quantity of parallelly connected PCSs is not limited to 2 in this embodiment. In actual application, the quantity of parallelly connected PCSs may equal 3, 4, or another value, depending on a specific application scenario. This is not limited in this application.

It should be understood that, in the foregoing embodiment, CAN communication and FE communication each are merely a solution of the embodiment, and a communication manner is not limited to CAN communication and FE communication. This is not limited in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An energy storage system, comprising at least one energy storage device, at least one power conversion system, and an energy management system, wherein the energy management system is in communication connection to the at least one energy storage device, and is in communication connection to the at least one power conversion system;
each energy storage device comprises at least one battery cluster and at least one battery control unit, each battery control unit is in communication connection to at least one power conversion system, the battery control unit is in communication connection to the battery cluster in a one-to-one correspondence, and the battery control unit is configured to: monitor operating information of the battery cluster, send the operating information of the battery cluster to the energy management system, and send the operating information of the battery cluster to the power conversion system;
the power conversion system is configured to send the operating information of the battery cluster to the energy management system;
the energy management system is configured to deliver a control instruction to the at least one power conversion system and the at least one energy storage device; and
the at least one power conversion system is configured to perflaimrm charging and discharging control on the at least one energy storage device.

2. The energy storage system according to claim 1, wherein each energy storage device comprises a centralized management unit, the centralized management unit is in communication connection to the energy management system, and the at least one battery control unit is configured to send the operating information of the battery cluster to the energy management system via the centralized management unit.

3. The energy storage system according to claim 2, wherein the at least one battery control unit in each energy storage device is in communication connection in sequence, and each of a first battery control unit and a last battery control unit in the battery control unit that is in communication connection in sequence is in communication connection to the centralized management unit in the energy storage device.

4. The energy storage system according to claim 2, wherein each battery control unit in each energy storage device is in communication connection to the centralized management unit in the energy storage device.

5. The energy storage system according to claim 3 or 4, wherein the at least one power conversion system is in communication connection in sequence, and each of a first power conversion system and a last power conversion system in the power conversion system that is in communication connection in sequence is in communication connection to the energy management system.

6. The energy storage system according to claim 3 or 4, wherein each of the at least one power conversion system is in communication connection to the energy management system.

7. The energy storage system according to claim 1, wherein each power conversion system comprises a monitoring unit and a control unit, there is a first communication line and a second communication line between the monitoring unit and the control unit, and a baud rate of the first communication line is different from a baud rate of the second communication line.

8. The energy storage system according to claim 1, wherein each battery cluster is in power connection to at least two power conversion systems.

9. The energy storage system according to claim 1, wherein each battery control unit is in communication connection to at least two power conversion systems.

10. The energy storage system according to claim 1, wherein the at least one power conversion system is configured to receive information about a connection relationship between the at least one power conversion system and the at least one battery control unit, and the at least one power conversion system is further configured to send the information about the connection relationship to the energy management system.

11. The energy storage system according to claim 1, wherein a manner of the communication connection comprises CAN communication or FE communication.

12. The energy storage system according to claim 2, wherein each energy storage device comprises an environmental device, the environmental device is in communication connection to the centralized management unit, and the environmental device comprises a fire extinguishing device, a temperature control device, an anti-theft device, or an auxiliary power supply device.

13. A power conversion system, wherein the power conversion system is configured to: be in communication connection to an energy management system, and perform charging and discharging control on an energy storage device;
the power conversion system is configured to: be in communication connection to a battery control unit in the energy storage device, and receive operating information that is of a battery cluster and that is sent by the battery control unit; and
the power conversion system is configured to: send the operating information of the battery cluster to the energy management system; and
receive a control instruction delivered by the energy management system.

14. The power conversion system according to claim 13, wherein the power conversion system comprises a monitoring unit and a control unit, there is a first communication line and a second communication line between the monitoring unit and the control unit, and a baud rate of the first communication line is different from a baud rate of the second communication line.

15. The power conversion system according to claim 13, wherein the power conversion system is configured to: receive information about a connection relationship between the power conversion system and the battery control unit, and send the information about the connection relationship to the energy management system.

16. The power conversion system according to claim 13, wherein a manner of the communication connection comprises CAN communication or FE communication.
